# EUROPÄISCHE PATENTSCHRIFT

(11) **EP 4 032 693 B1**
(45) Veröffentlichungstag und Bekanntmachung des Hinweises auf die Patenterteilung: **06.08.2025**
(21) Anmeldenummer: 21208218.4
(22) Anmeldetag: 15.11.2021
(51) Int. Cl.: B29D 30/06, B29D 30/72, B29D 30/66

(54) **VULKANISATIONSFORM FÜR FAHRZEUGLUFTREIFEN**
VULCANISATION MOULD FOR PNEUMATIC VEHICLE TYRES
MOULE DE VULCANISATION POUR PNEUMATIQUES DE VÉHICULE

(30) Priorität: 26.01.2021 DE 102021200651
(43) Veröffentlichungstag der Anmeldung: 27.07.2022
(73) Patentinhaber: Continental Reifen Deutschland GmbH, 30175 Hannover (DE)
(72) Erfinder: Hoppe, Nicholas, 30165 Hannover (DE); Dzick, Jürgen, 30165 Hannover (DE); Voelker, Bert, 30165 Hannover (DE)
(74) Vertreter: Continental Corporation

(56) Entgegenhaltungen:
- EP-A1- 1 426 171
- EP-A1- 3 524 446
- DE-A1- 102018 209 677
- JP-A- 2011 116 012
- KR-A- 20200 000 013
- KR-U- 19980 032 407
- US-A1- 2015 251 367

## Beschreibung

Die Erfindung betrifft eine Vulkanisationsform für Fahrzeugluftreifen mit Formteilen, wie Profilringsegmenten und Seitenschalen, welche zur Formkavität jeweils eine Innenseite aufweisen und mit zumindest einer durchgehenden Bohrung für einen Moldpin versehen sind,-in welche anstelle eines Moldpins auf austauschbare Weise und von der Innenseite her sowie vor Verdrehen gesichert ein metallisches Insert eingesetzt ist.

Für den Einsatz unter winterlichen Fahrbedingungen, insbesondere auf eisigem Untergrund, vorgesehene und geeignete Fahrzeugluftreifen, beispielsweise sogenannte Nordicreifen, weisen im Laufstreifen eine Vielzahl von schmalen Einschnitten auf und werden oft zusätzlich mit Spikes bestückt. Diese Spikes werden in den Laufstreifen des fertig vulkanisierten Reifens in dort bei der Vulkanisation ausgebildete Löcher nachträglich eingebracht. Diese Löcher werden beim Vulkanisieren des Reifens in einer Vulkanisationsform durch in den Profilringsegmenten befestigte, an der Innenseite der Profilringsegmente abragende Moldpins gebildet. Sind in einer Vulkanisationsform Spikepositionen (Bohrungen) ausgebildet worden, bei welchen sich nachträglich herausstellt, dass keine Moldpins zum Ausbilden von Spikelöchern im Laufstreifen eingesetzt oder bereits eingesetzte Moldpins entfernt werden sollen, werden nach dem Entfernen etwaiger Moldpins die vorhandenen Bohrungen von der Innenseite der Formteile her mit Inserts verschlossen, die mit der Forminnenseite weitgehend eben abschließen. Ein Entfernen von Moldpins findet beispielsweise dann statt, wenn die am Laufstreifen vorhandene Spikeabfolge eine unerwünschte Geräuschemission des Reifens auf trockenem Untergrund zur Folge hat, wenn durch zu viele Spikes ein unzulässiger Straßenabrieb verursacht wird oder wenn eine bestimmte Performanceabstufung innerhalb einer Produktlinie erwünscht ist. Die bislang verwendeten Inserts hinterlassen am Laufstreifen des vulkanisierten Reifens kreisförmige Abdrücke, die das Gesamterscheinungsbild des Reifens beeinträchtigen und daher als optisch störend empfunden werden.

Eine Vulkanisationsform der eingangs genannten Art ist beispielsweise aus der DE 10 2018 209 677 A1 bekannt. Diese Druckschrift offenbart ein Verfahren zur Herstellung von Profilringsegmenten eines Laufstreifens eines Fahrzeugreifens, wobei an der Innenseite der Profilringsegmente Moldpins zum Ausformen von Spikelöchern im Laufstreifen eingebracht sind. An den Moldpin-Positionen sind Vertiefungen erstellt, in welche an die Vertiefungen angepasste Inserts eingesetzt sind, welche jeweils mit einem Moldpin versehen sind. An ihren Deckflächen weisen bei einer bevorzugten Ausführung die Inserts zumindest eine Erhebung auf, welche in den Laufstreifen des Reifens jeweils ein Eisreservoir einprägt. Aus der KR 2020 0000013 A ist ein Entlüftungsventil zum Einsetzen einer Bohrung einer Vulkanisationsform bekannt, wobei das Entlüftungsventil ein Gehäuse und einen beweglichen, beim Einformen des Reifens die Entlüftungsbohrung verschließbaren Kolben aufweist. Dieser kann an seiner der Forminnenseite zugewandten Außenseite mit einem Design versehen sein, welches ein Muster in die Außenfläche des Reifens einprägt um dessen Laufstreifendesign zu komplettieren. Die JP 2011 116012 A offenbart ebenfalls ein in eine Bohrung eines Fronteils einer Vulkanisationsform einsetzbares Entlüftungsventil mit einem Feder beaufschlagten Ventilverschluss, welcher beim Einformen des Reifens durch den sich einformenden Reifen in die geschlossene Stellung bewegt wird. Der Ventilverschluss ist außenseitig mit zumindest einem Vorsprung oder zumindest einer Vertiefung versehen. Die US 2015/0251367 A1 offenbart ein in eine Vulkanisationsform einsetzbares, einen Moldpin aufweisendes Insert, um im zu vulkanisierenden Reifen Löcher zum späteren Einsetzen von Spikes auszubilden. Am Insert sind formteilinnenseitig separate Elemente austauschbar befestigt, die beispielsweise dafür sorgen, dass im vulkanisierten Reifen eine optische Angleichung an das sonstige Laufstreifendesign, beispielsweise mit dort ausgebildeten Einschnitten, erfolgt.

Der Erfindung liegt die Aufgabe zugrunde, in Bohrungen von Formteilen eingesetzte Inserts derart auszuführen bzw. zu gestalten, dass sie das Gesamterscheinungsbild des vulkanisierten Reifens verbessern und/oder die von ihnen ausgebildeten Stellen im Laufstreifen die Steifigkeit des Laufstreifens und derart dessen Performance positiv beeinflussen können.

Gelöst wird die gestellte Aufgabe erfindungsgemäß dadurch, dass das Insert ein die Forminnenseite um 0,3 mm bis 2,0 mm überragendes dreidimensional strukturiertes Element aufweist.

Gemäß der Erfindung prägt sich daher an der Insert- Stelle im Gummimaterial des Reifens außenseitig ein dreidimensional strukturiertes Element ein, welches optisch an das Gesamterscheinungsbild des Reifens gut angepasst sein kann bzw. dieses sogar optisch vorteilhaft betonen kann, indem es durch seine Ausgestaltung beispielsweise den Einsatzzweck des Reifens hervorhebt. Die Struktur des Elementes kann ferner derart gestaltet sein, dass seine Einprägung im Laufstreifen des vulkanisierten Reifens beispielsweise lokal die Steifigkeit oder den Schneegriff verbessert, letzteres indem ein Ansammeln von Schnee in der im Laufstreifen gebildeten Struktur begünstigt und derart die Schnee-Schnee-Reibung verbessert wird. Eins solche Struktur kann sich beispielsweise aus mehreren parallel zueinander verlaufenden Mikrostegen mit einer Höhe und Breite von insbesondere 0,3 mm bis 0,8 mm zusammensetzen, die im Laufstreifen Einprägungen mit entsprechenden Rillen (von den Mikrostegen geformt) und Gummistegen dazwischen ausbilden.

Gemäß bevorzugten Ausführungen ist das dreidimensional strukturierte Element des Inserts figurativ, als zumindest ein Zeichen, beispielsweise zumindest eine Ziffer oder ein Buchstabe, als eine Ziffern- und/oder Buchstabenfolge oder als Logo gestaltet. Das Element kann daher derart gestaltet sein, dass es im Reifen eine Struktur einprägt, die den Verwendungszweck des Reifens betont oder die ein Warenzeichen oder eine Produktbezeichnung wiedergibt.

Zum Einsetzen des Inserts weist die Vulkanisationsform bevorzugt eine Stufenbohrung mit drei Abschnitten auf, welche insbesondere eine für einen Moldpin vorgesehene und bereits vorhandene Stufenbohrung ist, wobei das das Insert mit einem mit der Innenseite des Formteils bündig abschließenden Basisteil in den am weitesten forminnenseitig befindlichen Abschnitt der Stufenbohrung eingesetzt ist. Eine Stufenbohrung gestattet ein lösbares Befestigen des Inserts, ermöglicht daher auch einen Austausch des Inserts.

Besonders bevorzugt ist ferner eine Ausführung, bei welcher zumindest das dreidimensional strukturierte Element des Inserts, bevorzugt das gesamte Insert, nach einem additiven Verfahren schichtweise aus einem Metallpulver aufgebaut bzw. hergestellt worden ist. Ein gut geeignetes additives Verfahren ist beispielsweise selektives Laserschmelzen. Ein derart hergestelltes Insert kann ein besonders komplex dreidimensional gestaltetes Element aufweisen. Bei einer weiteren bevorzugten Ausführung ist der Basisteil des Inserts ein Drehteil, auf welchem das dreidimensional strukturierte Element in einem additiven Verfahren schichtweise aus einem Metallpulver aufgebaut worden ist. Alternativ können komplex gestaltete dreidimensional strukturierte Elemente auch auf Inserts ausgebildet sein, welche mittels eines Fräsverfahrens hergestellt worden sind.

Vorzugsweise überragt das dreidimensional strukturierte Element die Forminnenseite um 1,0 mm bis 2,0 mm, und weist einen Durchmesser von 3,0 mm bis 15,0 mm auf.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Ausführungsform einer herkömmlichen, zum Einsetzen eines Moldpins vorgesehenen Stufenbohrung in einem Profilringsegment einer Vulkanisationsform für einen Fahrzeugluftreifen im radialen Schnitt,
Fig. 2 eine Ansicht einer Ausführungsvariante eines Inserts in Schrägansicht,
Fig. 3 die Stufenbohrung aus Fig. 1 mit eingesetztem Insert, welches zum Teil im radialen Schnitt dargestellt ist, und
Fig. 4 eine Ansicht eines Ausschnittes eines Profilringsegmentes mit eingesetztem Insert.

Der in der Beschreibung verwendete Begriff "radiale Richtung" bezieht sich auf einen in der Vulkanisationsform auszuformenden und zu vulkanisierenden Reifen. Die Vulkanisationsform ist eine Vulkanisationsform für einen Fahrzeugluftreifen beliebiger Bauart, insbesondere für Personenkraftwagen, Vans, Light-Trucks oder Nutzfahrzeuge. Das im Nachfolgenden beschriebene Ausführungsbeispiel bezieht sich auf eine Vulkanisationsform mit einem segmentierten Profilring mit Moldpin-Positionen zum Ausbilden von Löchern im Laufstreifen zum Einsetzen von Spikes im Laufstreifen und auf eine Vulkanisationsform für einen PKW-Fahrzeug luftreifen, vorzugsweise einen sogenannten Nordicreifen.

Eine derartige Vulkanisationsform weist üblicherweise Seitenschalen, welche die Seitenwände des Reifens ausformen, und eine Anzahl, beispielsweise 7 bis 14, von im Gummimaterial des Laufstreifens eines Rohrreifens die Laufstreifenprofilierung ausformenden Profilringsegmenten, welche gemeinsam den Profilring bilden, auf. Zur Vulkanisation wird der fertig aufgebaute Reifenrohling in die Vulkanisationsform eingebracht und in dieser in bekannter Weise eingeformt. In den Profilringsegmenten ist jeweils eine Vielzahl von Stufenbohrungen enthalten, in welche Moldpins eingebracht und mittels Schauben gehalten werden, wobei die Moldpins beim Vulkanisieren des Reifens in den Laufstreifen Löcher einformen, in welche bei fertig vulkanisiertem Reifen Spikes eingebracht werden können.

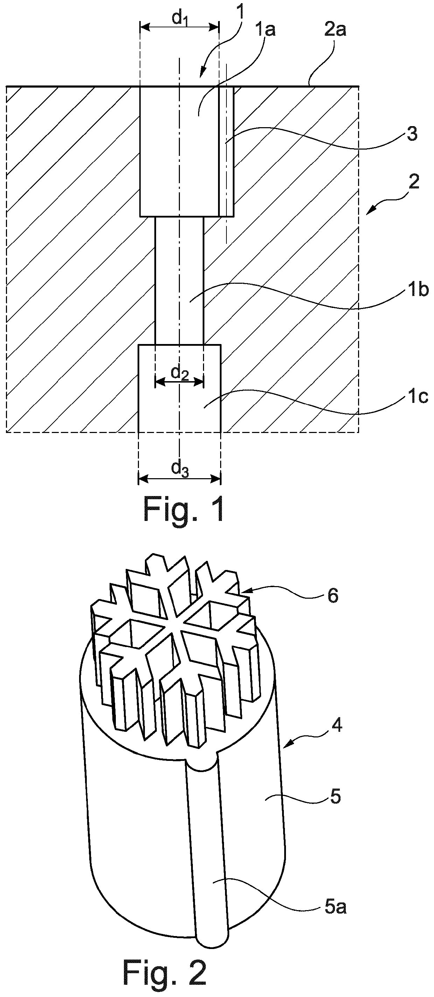

Fig. 1 zeigt im radialen Schnitt eine zum Einsetzen eines Moldpins vorgesehene Stufenbohrung 1 in einem kleinen Teilbereich eines Profilringsegmentes 2. Die der Forminnenseite, der Formkavität, zugewandte Innenseite des Profilringsegmentes 2 ist mit 2a bezeichnet. Die Stufenbohrung 1 weist drei zentrisch zueinander verlaufende, im Querschnitt kreisförmige Abschnitte auf, einen an die Innenseite 2a anschließenden Abschnitt 1a mit einem konstanten Durchmesser d1, einen mittleren Abschnitt 1b mit einem konstanten Durchmesser d2, welcher kleiner ist als d1, und einen dritten Abschnitt 1c, mit welchem die Stufenbohrung 1 an der der Rückseite des Profilringsegmentes 2 nach außen mündet und welcher einen konstanten Durchmesser d3 aufweist, welcher größer ist als der Durchmesser d2 und im Beispiel dem Durchmesser d1 entspricht.. Der Durchmesser d1 im Abschnitt 1a ist an den Durchmesser des in diesem Abschnitt einzusetzenden Moldpins angepasst. Ein eingesetzter Moldpin kann somit von der Rückseite des Profilringsegmentes 2 her mittels einer Schraube fixiert werden. Eine zweite, mit einem wesentlich kleineren Durchmesser als der Durchmesser d1 ausgeführte Bohrung 3, die mit dem Abschnitt 1a zum Teil überlappt und über dessen radiale Erstreckung ausgeführt ist, gestattet ein Einsetzen eines als Verdrehsicherung dienenden Stiftes. Der Durchmesser d1 des ersten Abschnittes 1a der Stufenbohrung 1 beträgt beispielsweise 4,00 mm bis 6,00 mm, der Durchmesser der Bohrung 3 in der Größenordnung von 1,50 mm bis 2,00 mm.

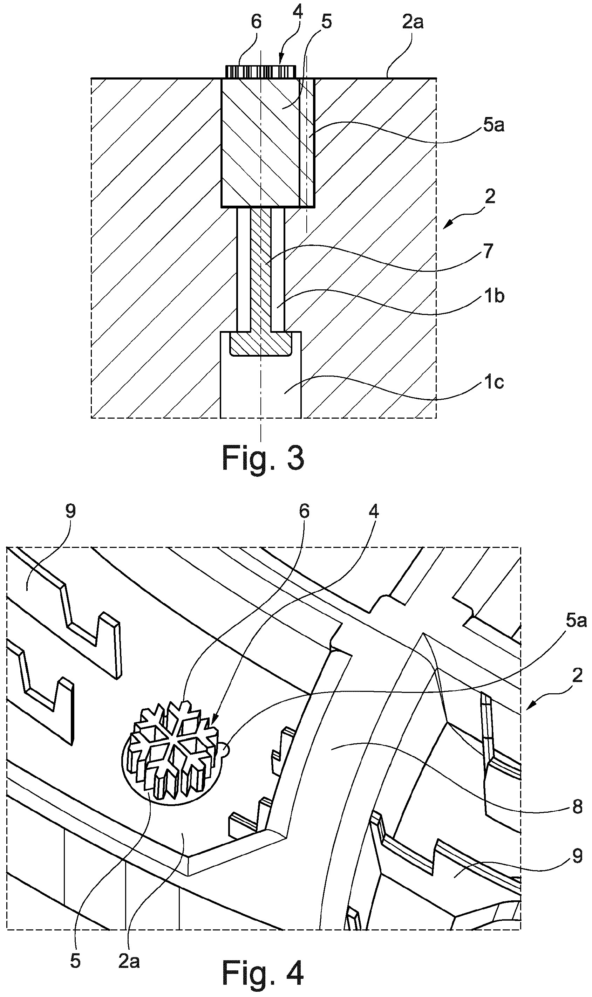

In Fig. 3 ist anstelle eines Moldpins ein Insert 4 an einer weggefallenen Spikeposition in die Stufenbohrung 1 eingesetzt und mit einer Schraube 7 fixiert.

Bei dem in Fig. 2 und Fig. 3 gezeigten Ausführungsbeispiel weist das Insert 4 einen im Abschnitt 1a der Stufenbohrung 1 sitzenden zylindrischen Basisteil 5 mit einem im Querschnitt etwa halbkreisförmigen Ansatz 5a auf, dieser ist gemäß der überlappenden Bohrung 3 im Abschnitt 1a der Stufenbohrung 1 gestaltet. Das Insert 4 überragt die Innenseite 2a mit einem dreidimensional strukturierten Element 6, welches im Beispiel figurativ gestaltet ist, und zwar als schematischer Schneestern. Das Element 6 weist eine konstante oder variierende Höhe von insbesondere 0,3 mm bis 2,0 mm, insbesondere 1,0 mm bis 2,0 mm, einen Durchmesser von 3,0 mm bis 6,0 mm auf und setzt sich bei der gezeigten Ausführung aus sechs regelmäßig verteilt angeordneten Sternarmen zusammen, die sämtlich übereinstimmend ausgeführt sind. In Fig. 3 ist der Basisteil 5 des Inserts 4 im Schnitt, das Element 6 ist jedoch in Seitenansicht gezeigt.

Fig. 4 zeigt eine Ansicht eines Ausschnittes der Innenseite eines Profilringsegmentes 2 mit Formstegen 8, die im Laufstreifen des Reifens Rillen ausformen, und mit Lamellen 9, die im Laufstreifen des Reifens schmale Einschnitte ausformen. Die Formstege 8 umlaufen ein Flächenelement, welches im Laufstreifen des Reifens die Außenfläche eines Profilblockes ausbildet und von welchem eine Stufenbohrung 1 ausgeht. Von dem in die Stufenbohrung 1 eingesetzten und mittels einer Schraube von der Außenseite des Profilringsegmentes 2 her befestigten Insert 4 ist das in Sternform gestaltete Element 6 zu sehen, welches das Flächenelement überragt. Im vulkanisierten Laufstreifen befindet sich dann an dieser Stelle ein eingeprägter "Schneestern" als Negativ des Elementes 6.

Der Ansatz 5a des Basisteils 5 hat, analog wie bei einem Moldpin, den Zweck einer Verdrehsicherung. Alternativ kann ein separater Bolzen verwendet werden, wobei in diesem Fall der zylindrische Basisteil 5 mit einer korrespondierenden Nut oder Rille entlang seiner radialen Erstreckung versehen ist. Der an der Forminnenseite überstehende Teil des Inserts 4, das Element 6, kann mit einer entsprechenden Überdeckung des Bolzens gestaltet werden.

Die gezeigte Ausführung des Elementes 6 als schneesternähnliches Designelement ist lediglich ein Beispiel. Das Element 6 kann eine beliebige bildlicher oder sonstige Ausgestaltung aufweisen, beispielsweise auch als Logo oder ein Teil eines Logos gestaltet sein.

Das Insert 4 besteht aus einem Metall bzw. einer Metalllegierung und wird gemäß einer bevorzugten Ausführung mitsamt dem Element 6 durch ein additives Fertigungsverfahren, beispielsweise durch selektives Laserschmelzen, aus einem Metallpulver hergestellt und derart schichtweise aufgebaut. Ein derartiges Verfahren gestattet es, auf einfache Weise beliebig gestaltete Elemente 6 herzustellen. Alternativ ist der Basisteil 5 des Inserts 4 ein Drehteil, also durch Spanen hergestellt, an welchem die erwähnte Nut oder Rille eingebracht wird und auf dessen Oberseite das Element 6 durch ein additives Fertigungsverfahren, beispielsweise durch selektives Laserschmelzen, aus einem Metallpulver aufgebaut wird. Das Insert 4 kann ferner in einem Gießverfahren hergestellt werden und das Element 6 durch Fräsen oder Lasergravieren gestaltet werden. Es ist auch möglich, komplette Inserts 4 nach einem Fräsverfahren herzustellen.

Bei einer weiteren Ausführungsvariante der Erfindung werden Inserts 4 in separat in Formsegmenten oder Seitenschalen von Vulkanisationsformen ausgebildete Bohrungen, insbesondere Stufenbohrungen, eingesetzt und durch Schrauben gehalten, sodass ein Austausch möglich ist. Beliebig gestaltete Elemente 6 können somit an der Außenseite des Reifens, im Laufstreifen oder in den Seitenwänden, lokal Designs oder die Steifigkeit des Laufstreifens und/oder seine Performance verbessernde Strukturen ins Gummimaterial einprägen. Die diesbezüglich vorgesehen Bohrungen können einen größeren oder kleineren Durchmesser als herkömmlicher Stufenbohrungen für Moldpins aufweisen, beispielsweise in der Größenordnung von bis zu 15,00 mm.

### Bezugsziffernliste

- 1: Stufenbohrung
- 1a, 1b, 1c: Abschnitt
- 2: Profilringsegment
- 2a: Innenseite
- 3: Bohrung
- 4: Insert
- 5: Basisteil
- 5a: Ansatz
- 6: Element
- 7: Schraube
- 8: Formsteg
- 9: Lamelle
- d1, d2, d3: Durchmesser

## Patentansprüche

1. Vulkanisationsform für Fahrzeugluftreifen mit Formteilen, wie Profilringsegmenten (2) und Seitenschalen, welche zur Formkavität jeweils eine Innenseite (2a) aufweisen und mit zumindest einer durchgehenden Bohrung (1) für einen Moldpin versehen sind, in welche anstelle eines Moldpins-auf austauschbare Weise und von der Innenseite (2a) her sowie vor Verdrehen gesichert ein metallisches Insert (4) eingesetzt ist,
**dadurch gekennzeichnet,**
**dass** das Insert (4) ein die Forminnenseite (2a) um 0,3 mm bis 2,0 mm überragendes dreidimensional strukturiertes Element (6) aufweist.

2. Vulkanisationsform nach Anspruch 1, **dadurch gekennzeichnet, dass** das dreidimensional strukturierte Element (6) des Inserts (4) figurativ oder als zumindest ein Zeichen, beispielsweise zumindest eine Ziffer oder ein Buchstabe, als eine Ziffern -und/oder Buchstabenfolge oder als ein Logo gestaltet ist.

3. Vulkanisationsform nach Anspruch 1, **dadurch gekennzeichnet, dass** die Bohrung eine Stufenbohrung (1) mit drei Abschnitten (1a, 1b, 1c), insbesondere eine für einen Moldpin vorgesehene Stufenbohrung, ist, wobei das Insert (4) mit einem, mit der Innenseite (2a) bündig abschließenden Basisteil (5) in den am weitesten forminnenseitig befindlichen Abschnitt (1a) der Stufenbohrung (1) eingesetzt ist.

4. Vulkanisationsform nach einem der Ansprüche 1 bis 3, **dadurch gekennzeichnet, dass** zumindest das dreidimensional strukturierte Element (6) des Inserts (4) in einem additiven Verfahren schichtweise aus einem Metallpulver aufgebaut worden ist.

5. Vulkanisationsform nach einem der Ansprüche 1 bis 4, **dadurch gekennzeichnet, dass** das Insert (4) mitsamt dem dreidimensional strukturierten Element (6) in einem additiven Verfahren schichtweise aus einem Metallpulver aufgebaut worden ist.

6. Vulkanisationsform nach einem der Ansprüche 1 bis 4, **dadurch gekennzeichnet, dass** der Basisteil (5) des Inserts (4) ein Drehteil ist, auf welchem das dreidimensional strukturierte Element (6) in einem additiven Verfahren schichtweise aus einem Metallpulver aufgebaut worden ist.

7. Vulkanisationsform nach einem der Ansprüche 1 bis 4, **dadurch gekennzeichnet, dass** das Insert (4) mitsamt dem dreidimensional strukturierten Element (6) in einem Fräsverfahren hergestellt worden ist.

8. Vulkanisationsform nach einem der Ansprüche 1 bis 7, **dadurch gekennzeichnet, dass** das dreidimensional strukturierte Element (6) die Forminnenseite um 1,0 mm bis 2,0 mm überragt.

9. Vulkanisationsform nach einem der Ansprüche 1 bis 8, **dadurch gekennzeichnet, dass** das dreidimensional strukturierte Element (6) einen Durchmesser von 3,0 mm bis 15,0 mm aufweist.

## Claims

1. Vulcanization mould for pneumatic vehicle tyres, having mould parts, such as profile-ring segments (2) and side shells, which respectively have an inner side (2a) towards the mould cavity and are provided with at least one through-bore (1) for a mould pin, into which, instead of a mould pin, a metallic insert (4) is inserted in an exchangeable manner and from the inner side (2a) and so as to be secured against twisting,
**characterized**
**in that** the insert (4) has a three-dimensionally structured element (6) protruding by 0.3 mm to 2.0 mm beyond the mould inner side (2a).

2. Vulcanization mould according to Claim 1, **characterized in that** the three-dimensionally structured element (6) of the insert (4) is designed as a figure or as at least one character, for example at least one digit or one letter, as a digit and/or letter sequence or as a logo.

3. Vulcanization mould according to Claim 1, **characterized in that** the bore is a stepped bore (1) with three portions (1a, 1b, 1c), in particular a stepped bore provided for a mould pin, wherein the insert (4) is inserted by way of a base part (5), which terminates flush with the inner side (2a), into that portion (1a) of the stepped bore (1) which is situated furthest on the mould inner side.

4. Vulcanization mould according to one of Claims 1 to 3, **characterized in that** at least the three-dimensionally structured element (6) of the insert (4) has been constructed in layers from a metal powder in an additive process.

5. Vulcanization mould according to one of Claims 1 to 4, **characterized in that** the insert (4), complete with the three-dimensionally structured element (6), has been constructed in layers from a metal powder in an additive process.

6. Vulcanization mould according to one of Claims 1 to 4, **characterized in that** the base part (5) of the insert (4) is a turned part on which the three-dimensionally structured element (6) has been constructed in layers from a metal powder in an additive process.

7. Vulcanization mould according to one of Claims 1 to 4, **characterized in that** the insert (4), complete with the three-dimensionally structured element (6), has been produced in a milling process.

8. Vulcanization mould according to one of Claims 1 to 7, **characterized in that** the three-dimensionally structured element (6) protrudes by 1.0 mm to 2.0 mm beyond the mould inner side.

9. Vulcanization mould according to one of Claims 1 to 8, **characterized in that** the three-dimensionally structured element (6) has a diameter of 3.0 mm to 15.0 mm.

## Revendications

1. Moule de vulcanisation pour bandages pneumatiques de véhicule comprenant des pièces moulées, comme des segments d'anneaux profilés (2) et des coques latérales, qui possèdent respectivement un côté intérieur (2a) vers la cavité du moule et sont pourvus d'au moins un perçage traversant (1) pour une broche de moule, dans lequel, à la place d'une broche de moule, est inséré un insert métallique (4) de manière interchangeable et bloqué depuis le côté intérieur (2a) ainsi qu'en rotation,
**caractérisé en ce que**
l'insert (4) possède un élément (6) structuré de manière tridimensionnelle qui dépasse du côté intérieur de moule (2a) de 0,3 mm à 2,0 mm.

2. Moule de vulcanisation selon la revendication 1, **caractérisé en ce que** l'élément (6) structuré de manière tridimensionnelle de l'insert (4) est conçu de manière figurative ou sous la forme d'au moins un signe, par exemple au moins un chiffre ou une lettre, sous la forme d'une séquence de chiffres et/ou de lettres ou sous la forme d'un logo.

3. Moule de vulcanisation selon la revendication 1, **caractérisé en ce que** le perçage est un perçage étagé (1) à trois portions (1a, 1b, 1c), notamment un perçage étagé prévu pour une broche de moule, l'insert (4) étant inséré dans la portion (1a) du perçage étagé (1) qui se trouve le plus loin du côté intérieur du moule avec une partie de base (5) qui ferme à fleur le côté intérieur (2a).

4. Moule de vulcanisation selon l'une des revendications 1 à 3, **caractérisé en ce qu'**au moins l'élément structuré de manière tridimensionnelle (6) de l'insert (4) a été construit couche par couche à partir d'une poudre métallique dans un procédé additif.

5. Moule de vulcanisation selon l'une des revendications 1 à 4, **caractérisé en ce que** l'insert (4), conjointement avec l'élément structuré de manière tridimensionnelle (6), a été construit couche par couche à partir d'une poudre métallique dans un procédé additif.

6. Moule de vulcanisation selon l'une des revendications 1 à 4, **caractérisé en ce que** la partie de base (5) de l'insert (4) est une pièce rotative sur laquelle l'élément structuré de manière tridimensionnelle (6) a été construit couche par couche à partir d'une poudre métallique dans un procédé additif.

7. Moule de vulcanisation selon l'une des revendications 1 à 4, **caractérisé en ce que** l'insert (4), conjointement avec l'élément structuré de manière tridimensionnelle (6), a été fabriqué dans un procédé de fraisage.

8. Moule de vulcanisation selon l'une des revendications 1 à 7, **caractérisé en ce que** l'élément structuré de manière tridimensionnelle (6) dépasse de 1,0 mm à 2,0 mm du côté intérieur du moule.

9. Moule de vulcanisation selon l'une des revendications 1 à 8, **caractérisé en ce que** l'élément structuré de manière tridimensionnelle (6) présente un diamètre de 3,0 mm à 15,0 mm.
